Europäisches Patentamt

European Patent Office

Office européen des brevets

(19)

(11) Numéro de publication: **0 050 565**
**B1**

(12) **FASCICULE DE BREVET EUROPEEN**

(45) Date de publication du fascicule du brevet: **31.07.85**

(51) Int. Cl.⁴: **B 41 J 5/10, B 41 J 7/00**

(21) Numéro de dépôt: **81401620.0**

(22) Date de dépôt: **15.10.81**

(54) **Clavier de commande solidaire de la main.**

(30) Priorité: **17.10.80 FR 8022205**
**09.06.81 FR 8111278**

(43) Date de publication de la demande:
**28.04.82 Bulletin 82/17**

(45) Mention de la délivrance du brevet:
**31.07.85 Bulletin 85/31**

(84) Etats contractants désignés:
**BE CH DE FR GB IT LI NL SE**

(56) Documents cités:
**FR-A-1 601 874**
**US-A-3 022 878**
**US-A-3 507 376**

**XEROX DISCLOSURE BULLETIN, vol. 1, no. 2,
février 1976, D.C. KOWALSKI: "Semi-captive
keyboard", page 85**

(73) Titulaire: **INRO FRANCE
11, boulevard du Sud-Est
F-92000 Nanterre (FR)**

(72) Inventeur: **Kroczynski, Patrice
120, rue Camille Groult
F-94400 Vitry (FR)**

(74) Mandataire: **Phélip, Bruno et al
c/o Cabinet Harlé & Phélip 21, rue de la
Rochefoucauld
F-75009 Paris (FR)**

Courier Press, Leamington Spa, England.

# Description

La présente invention se rapporte à un clavier de commande, comportant un corps qui porte plusieurs touches actionnables par les doigts de l'utilisateur.

On connaît les claviers standards pour machines à écrire ou ordinateurs, où les touches sont disposées pratiquement à plat ou en arc de cercle, le principe d'utilisation consiste à appuyer à sa partie supérieure.

Cette opération demande un effort de coordination musculaire et un temps de déplacement entre le doigt et la touche. De plus, en travail dactylographique, les mots usuels du type d'activité reviennent très souvent, par exemple le préambule et la formule de politesse pour les lettres commerciales: Messieurs, Suite à notre entretien . . . Veuillez agréer . . . .

Le travail automatique de dactylographier ces formules est effectué d'une manière plus rapide en saisie vocale, à condition de pouvoir intervenir d'une manière quasi-réflexe lors de l'apparition d'une erreur ou d'une modification. Ce qui n'est pas aisé avec les claviers actuels.

D'autre part, la position de frappe sur les claviers classiques avec les mains et les avant bras loin du corps, provoque des fatigues dorsales.

— Il existe pour les muets des synthétiseurs à commande par clavier, mais les dispositions de ces derniers ne permettent pas une rapidité réflexe suffisante pour assurer une conversation à une vitesse convenable.

— Il existe pour les caisses enregistreuses des claviers qui permettent la saisie des prix et codes des produits, mais l'opératrice doit tourner la tête pour contrôler les produits puis afficher les prix, ce qui occasionne des erreurs et un supplément de fatigue.

— Il existe des claviers pour machines à commande numérique, mais le clavier n'est jamais à proximité immédiate de la main de l'employé qui contrôle les séquences; Le temps d'intervention entre le moment où une anomalie est détectée et l'intervention au clavier est trop long.

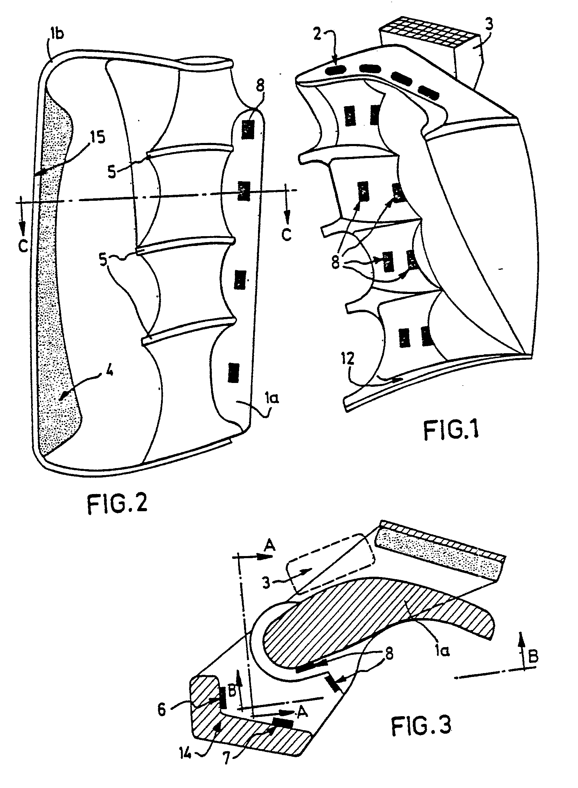

Le document US—A—3.022.878 montre un clavier tel que décrit dans le préambule de la revendication 1. Dans ce dispositif, les touches sont actionnées dans une pièce 6 qui peut coulisser à va et vient dans une direction qui est sensiblement dirigée vers le centre de la main, comme cela est clairement visible sur la figure 3. Ces déplacements de la pièce 6, entraînés par l'extrémité du doigt correspondant à des mouvements de pivotement de ce doigt autour du centre de la main. Des mouvements de l'extrémité du doigt dans une direction perpendiculaire sont sans effet sur les touches. Plus précisément, un mouvement correspondant à l'ouverture du doigt tend à mettre celui-ci en appui sur le fond de la cavité 8 de la pièce 6, et, par réaction à faire sortir la main du corps de clavier, alors que le mouvement inverse, correspondant à la fermeture du doigt, tend à dégager le doigt hors de la cavité 8.

Avec ce dispositif, seuls deux des mouvements possibles du doigt sont utilisés, ce qui conduit à un nombre de combinaisons limité.

Le "Xerox Disclosure Bulletin", vol. 1, N° 2, février 1976, montre, page 85, figure 2 des touches qui sont actionnées par plusieurs mouvements du doigt, à savoir les mêmes que ceux décrits dans US—A—3.022.878, plus un mouvement correspondant à l'ouverture du doigt lui-même, plus des mouvements correspondant au déplacement d'un doigt vers le voisin ou en direction opposée. Le nombre de combinaisons est accru, mais les derniers mouvements cités sont fatiguants et difficiles à exécuter par un doigt seul sans déplacement des autres.

La présente invention apporte une solution à ces problèmes par le fait qu'elle prévoit un dispositif qui présente les particularités énoncées dans la partie caractérisante de la revendication 1.

Ce type de clavier est prévu pour:

— la dactylographie avec entrée vocale, traitement de textes,

— commandes de synthétiseur pour muets,

— commandes de synthétiseur de musique,

— commandes pour manipulation en télé commande de produits dangereux ou contaminants,

— périphérique de saisie pour ordinateur, même en position couchée pour handicapés ou personne soumise à de fortes accélérations,

— caisse enregistreuse,

— commandes ou programmation de machines-outils numériques ou autre, ou de syntaxeur-robot industriel,

— commandes pour conduite de matériels tous terrains, avions rapides ou engins spatiaux.

L'invention sera exposée en détail à l'aide d'exemples de réalisation pratique illustrés par les dessins, parmi lesquels:

la figure 1 représente une coupe verticale partielle selon la ligne BB de la fig. 3 d'un clavier avec son micro, la partie externe n'a pas été représentée pour simplifier le dessin,

la figure 2 représente une vue suivant la ligne AA de la fig. 3 du même clavier avec l'applique en mousse de néoprène et les bossages pour séparer les doigts,

la figure 3 représente une vue en coupe horizontale de l'appareil, selon la ligne CC de la figure 2,

la figure 4 représente une variante de la fig. 3 avec les parties actives des touches assemblées par barrette de 4 éléments. Le pouce est figuré en pointillés et les touches du pouce ainsi que le dessus de l'appareil n'ont pas été représentés pour ne pas surcharger le dessin,

la figure 5 représente une barrette de 4 éléments de touches,

la figure 6 représente la coupe avec les touches du pouce complémentaires au dessin n° 4 pour la compréhension,

la figure 7 représente la vue de dessus complète de l'appareil des fig. 1 à 3 avec le micro, les voyants, les touches du pouce et la tête de lecture des codes batonnets,

la figure 8 représente le schéma de fonctionnement des circuits du clavier,

la figure 9 est une vue analogue à la fig. 4 et illustrant un autre mode de réalisation,

la figure 10 est une vue analogue à la fig. 6 et relative à une réalisation très proche de celle de la fig. 9,

les figures 11 à 17 sont relatives à une variante de l'invention:

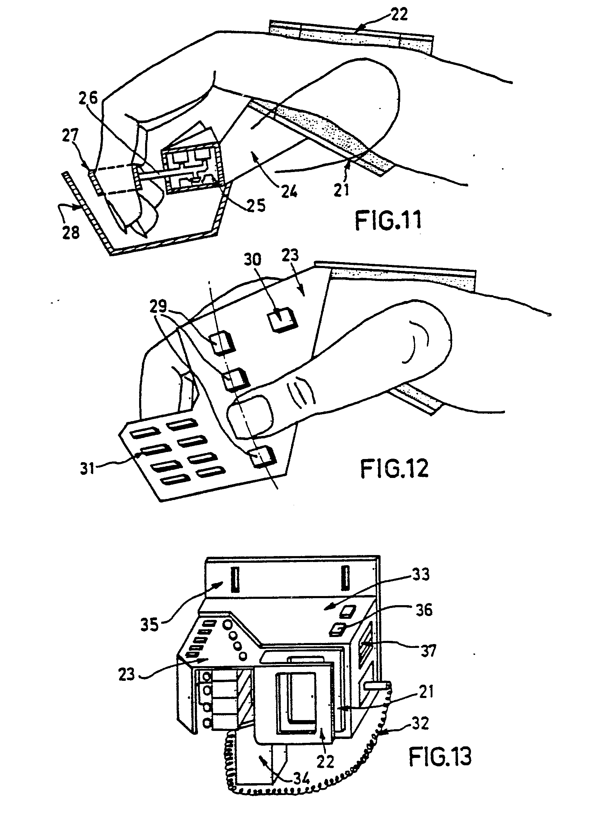

Figure 11 représente le clavier sur la main de l'utilisateur. Pour plus de clarté, le pouce n'a pas été représente.

Figure 12 représente le clavier vu de dessus avec les touches du pouce et les voyants de signalisation.

Figure 13 représente le clavier relié à un dispositif de traitement du signal ou enregistrement et placé sur un support vestimentaire.

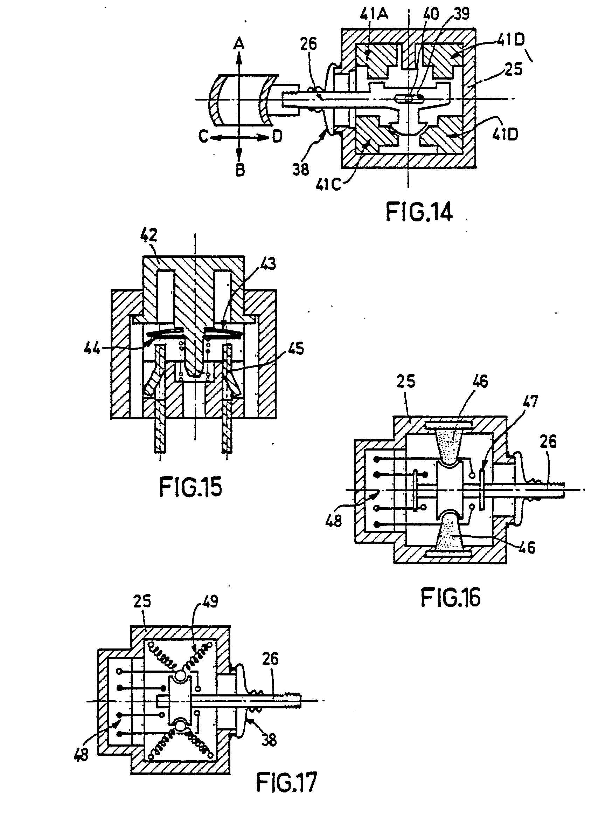

Figure 14 représente un dispositif de contacteur à rappel en position neutre assemblé avec une bague de commande.

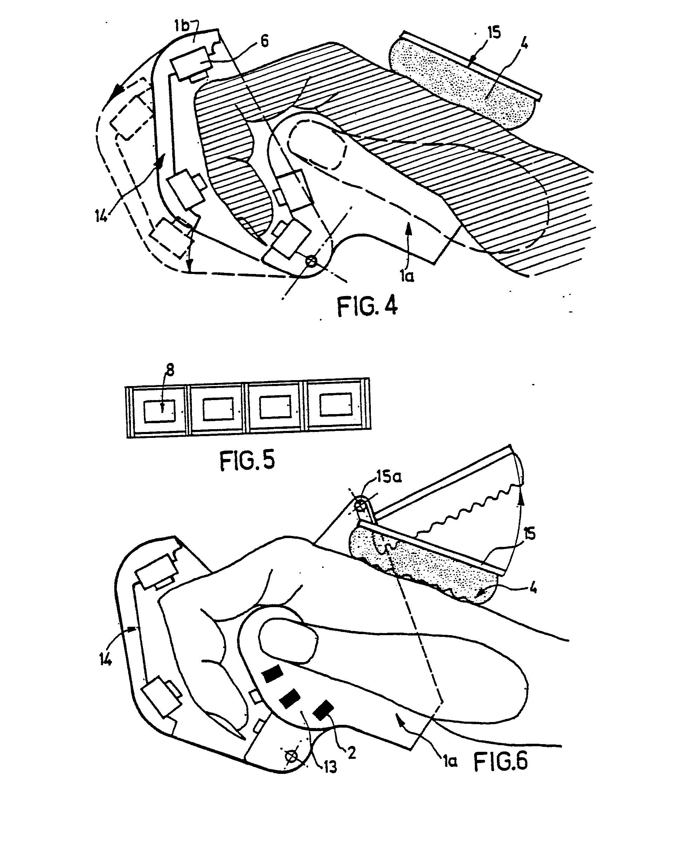

Figure 15 représente le détail de l'un des circuits de la figure 4.

Figure 16 représente une autre version de réalisation du contacteur commandé par bague.

Figure 17 représente une autre variante de réalisation du contacteur commandé par bague.

La clavier décrit aux fig. 1 à 8 comprend un corps 1 maintenu autour de la main de l'utilisateur au moyen d'un serrage entre la paume, l'éminence hypothénar et le dessus de la main.

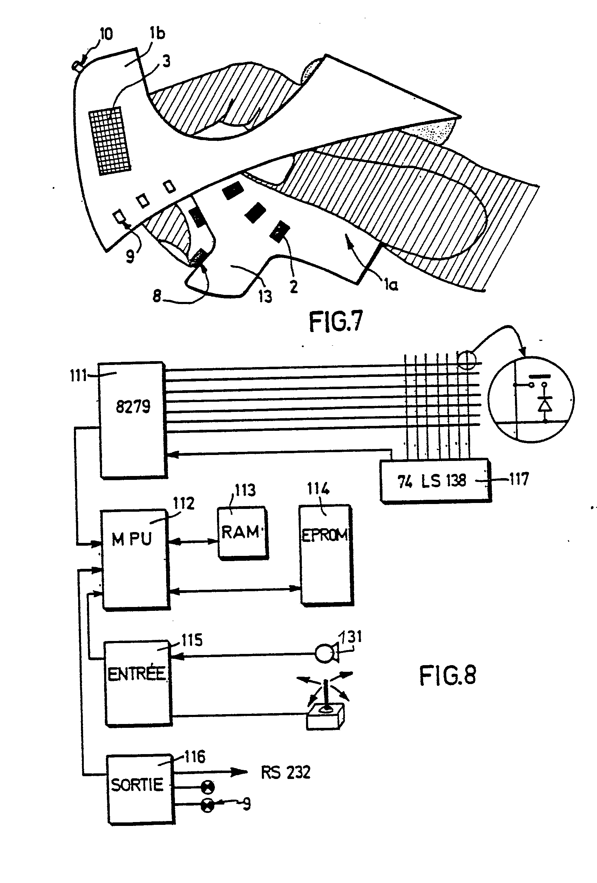

Le corps 1 comprend une partie palmaire 1a et une partie extérieure 1b qui forme un pont et est articulée sur la partie palmaire au moyen d'un pivot 1c. Les parties 1a et 1b sont de forme adaptée à celle de la main de l'utilisateur dans une position de repos. La partie palmaire porte quatre touches 2 actionnées par le pouce et un micro unidirectionnel 3 est en outre porté par la partie externe. Celle-ci porte en outre sur sa face interne une plaque 4 en mousse de néoprène®. La partie palmaire 1a présente des bossages 5 pour séparer les doigts. La partie externe 1b porte des touches 7 actionnées par la face interne des phalanges des doigts autres que le pouce, et les touches 8 actionnées par l'extrémité des phalangines des mêmes doigts, alors que la partie palmaire 1a porte pour chacun des mêmes doigts deux touches 8 actionnées par les phalangettes. Le pouce actionne de son côté les quatre touches 2 portées par la partie palmaire et disposées dans un plan et avec une direction d'actionnement perpendiculaire à celle des autres touches. Des voyants lumineux 9 (fig. 7) sont prévus sur la face supérieure de la partie externe, et celle-ci porte en outre un lecteur de code batonnets 10. La partie inférieure 12 de la partie externe 1b constitue un large appui pour le maintien de l'abducteur du petit doigt.

On observe que la partie externe 1b comporte une échancrure entre la section 14 qui porte les touches 6, 7 et la section 15 qui porte la masse plastique de maintien 4. Cette échancrure permet l'aération de la zone de l'articulation entre les phalanges des doigts autres que le pouce et les métacarpiens correspondants, pour un meilleur confort de l'utilisateur. La partie 15 qui porte la masse plastique 4 peut en outre être montée sur un pivot 15a pour faciliter l'introduction de la main, comme indiqué à la fig. 6.

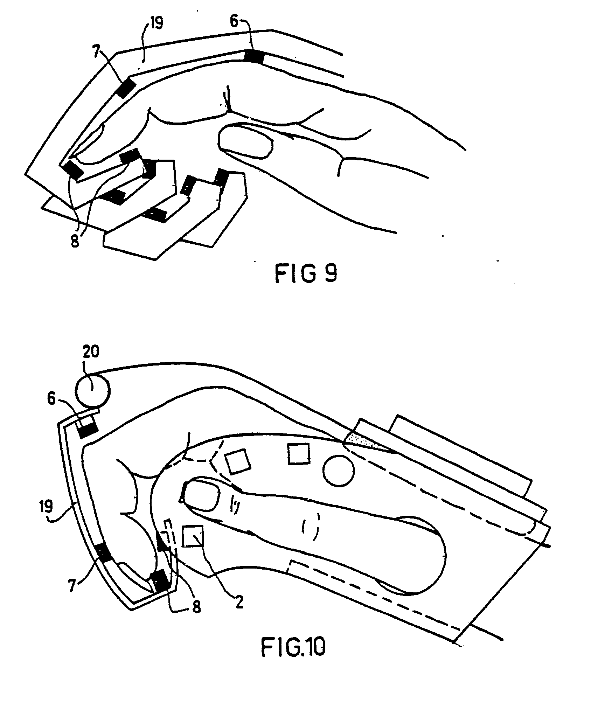

La figure 8 est un schéma de principe du fonctionnement des circuits du clavier avec le circuit 111 pour scruter les touches et transmettre l'adresse au processeur 112 les mémoires associées 113 et 114, l'interface d'entrée du micro 115 le micro 131, l'interface de sortie 116. Un circuit 117 a été couplé avec le circuit 111 pour assurer la lecture des colonnes de la matrice du clavier.

Selon une première variante, les touches peuvent être assemblées par 4 en barrette. Cette disposition simplifie la fabrication et la maintenance des appareils.

D'autre part, différentes forces d'appui sont réalisées par type de barrettes interchangeables, l'utilisateur choisissant la force d'appui qui lui convient.

Les touches de l'appareil seront réalisées suivant plusieurs variantes:

1) Touches à relais (relais "REED") dont les contacts sont enfermés dans une ampoule de verre scellée et manoeuvrés par le déplacement d'un petit aimant près de l'ampoule.

2) Touches à tore saturable. Le principe utilise la saturation et la désaturation du circuit magnétique en forme de tore d'un petit transformateur. Ce changement d'état magnétique est obtenu par le déplacement dans le tore d'un petit aimant lorsque la touche est appuyée. Le transformateur couplé à un oscillateur fournit en sortie un niveau détectable lorsqu'il est non saturé. La saturation du tore supprime la transmission du signal de l'oscillateur au détecteur.

3) Touches à contact mécanique. Les rebondissements de contacts seront éliminés grâce à un circuit anti-rebond.

4) Touches à effet hall. Le déplacement d'un aimant produit dans un transducteur à effet hall la détection de l'appui sur une touche.

5) Touches à effet capacitif. Une plaque solidaire de la touche augmente la capacité de couplage de deux autres plaques côte à côte lors de l'appui. Ces deux plaques, connectées entre un oscillateur et un amplificateur provoquent un niveau de sortie très différent suivant le couplage.

6) Touches à membrane. A chaque touche correspond sur le support une paire d'électrodes isolées l'une de l'autre. Au-dessus du support, un film de mylar® est percé d'un trou en face de chaque paire, un élastomère conducteur, placé au-dessus du mylar® réunit électriquement les deux électrodes sur l'appui. Cet ensemble est placé en-dessous des cabochons de touche ou directement sérigraphié afin de symboliser l'emplacement des touches.

Une variante particulièrement intéressante de la figure 1 comprend une triple touche phalangette 11 ce qui amène la suppression des touches phalange 6 et phalangine 7.

L'objet de la présente invention se décompose en parties:

1 — le clavier intérieur 13 qui est serré dans la main et qui comprend les touches phalangettes ainsi que les touches du pouce.

2 — le clavier extérieur 14 qui comprend les touches phalange et phalangine.

3 — le maintien mécanique contre la main 15 avec la forme d'appui en mousse de néoprène 4 ou autre matériau compressible; une garniture de propreté pouvant en outre être insérée entre l'appui en mousse et le dos de la main.

4 — le micro directionnel pour la saisie vocale 3. Dans certaines applications celui-ci peut être monté avec un prolongateur de manière à l'éloigner de la main de l'utilisateur. Dans d'autres variantes comme le pilotage d'engins rapides, le micro peut être remplacé par un laryngophone ou un casque microphone.

5 — les circuits électroniques de contrôle et des gestion du clavier qui indiquent à l'aide des voyants 9 de déroulement normal ou anormal du processus de saisie.

6 — diverses options comme le lecteur de code batonnet 10 pour les caisses enregistreuses lorsque l'appareil est utilisé en saisie de caisse de super marché. La cellule photoélectrique pour crayon lumineux sur tube cathodique. Le manche à balai ou stick qui permet d'introduire des actions proportionnelles dans le processus de saisie. Le stick se fixe à la partie inférieure de l'appareil 12, il est solidaire de 2 potentiomètres qui détectent les déplacements dans les 2 axes d'un plan de référence. Ce genre de stick est utilisé depuis de nombreuses années en télécommande.

Pour certaines applications comme la parole synthétique un dispositif de contrôle de rotation de l'appareil est intégré; son fonctionnement est basé sur le repérage par effet hall d'un aimant placé sur le vêtement de l'utilisateur. Ce dispositif permet d'augmenter la combinatoire des touches dans le cas où l'on ne peut se servir que d'une main ou pour intervenir rapidement à la vitesse réflexe sans annuler la saisie en cours, par simple rotation du poignet.

Une ceinture spéciale est utilisée pour poser l'appareil, elle comprend 2 supports en forme de fiche de raccordement (jack) pointes en haut. Ces fiches sont utilisées dans une variante de l'invention pour collecter les informations des claviers et pour recharger les batteries des claviers.

La ceinture comporte le dispositif de transmission à distance des informations du clavier. Naturellement dans la plupart des applications, les claviers sont reliés simplement par câble et par connecteur à l'unité centrale de traitement.

Cependant, l'invention permet d'utiliser le clavier sans fils de liaison grâce à la ceinture de transmission. Une autre variante pour l'alimentation en énergie électrique des claviers consiste à réaliser des boucles d'induction dans les jacks de ceinture. Dans ce cas, un enroulement secondaire à l'intérieur du clavier, concentrique autour du jack récupère l'énergie et recharge les batteries du clavier.

Pour l'entrée vocale à l'aide du microphone du clavier on utilise la méthode d'analyse des passages par zéro. Cette méthode utilise la dérivée première du signal vocal pour coder une matrice des phonèmes puis la reconnaissance des paroles par le microprocesseur repère 112 est assurée par comparaison des phonèmes prononcés par le locuteur avec ceux de la matrice. Les éléments de la matrice sont stockés dans une mémoire non volatile, le programme de conversions et d'analyse est stocké dans la mémoire ROM. Cette méthode étant connue il n'est pas besoin de la préciser davantage.

Une autre technique peut être avantageusement utilisée en variante constructive du présent appareil:

les phonèmes du locuteur sont analysés par une série de 16 filtres passe bande et sont convertis à l'aide d'un convertisseur analogique numérique en information numérique, caractérisant la durée et les caractéristiques du spectre de fréquence.

Il s'agit par conséquent d'une analyse spectrale.

Les données sont groupées sous forme de tableau, chacun représentant un mot enregistré qui sera utilisé par la suite pour être comparé à des nouveaux mots.

L'entrée vocale réduit le temps d'acquisition des données, les mouvements de l'opérateur, les besoins en personnel pour la saisie, les temps d'apprentissage.

On notera enfin que l'appareil de la présente invention est réalisé en matière plastique injectée genre ABS ou autre, que certaines parties de liaison démontables, comme la jonction entre le clavier intérieur et le clavier extérieur, seront très bien réalisées en acier inoxydable ou aluminium anodisé.

Enfin, l'appareil peut être pourvu de toutes les décorations, peintures, personnalisation, ainsi que des dispositifs d'ouverture et de verrouillage du maintien du dos de la main.

Des applications particulièrement intéressantes peuvent être la commande manuelle de synthétiseur de voix humaine pour les muets, ainsi que toutes les saisies ou commande qui nécessitent une vitesse quasi réflexe.

Les figures 9 et 10 montrent des variantes de construction de l'appareil. Les contacts 6, 7, 8 de phalange, phalangine et phalangette d'un même doigt sont portés par un même support 19 adapté à la forme du doigt de l'utilisateur, et les supports 19 des quatre doigts sont fixés dans la position convenable par rapport à la partie palmaire 1a (non représentée à la figure 9). Sur la figure 10, les mêmes supports 19 sont reliés à la partie palmaire 1a par un pivot 20, qui est bien entendu muni de moyens permettant son blocage pendant l'opération et son déblocage pour l'introduction ou le retrait de la main.

Ce mode de construction permet une adaptation plus facile à diverses conformations de mains, grâce à un jeu de supports 20 convenables.

Les figures 11 à 17 sont relatives à un autre type de construction du clavier.

Celui-ci comporte deux anneaux ou plaques ajourées 21, 22 garnis de matière élastique telle que de la mousse et de forme adaptée pour venir en appui l'un 21 sur la paume, l'autre 22 sur le dos de la main.

Les anneaux ou plaques ajourées sont reliés entre eux par un dessus 23 qui les solidarise à leur partie supérieure.

Un dessous 24 les solidarise à leur partie inférieure.

Cet assemblage constitue un chassis général.

Sur ce chassis, sont fixés, au moyen d'entretoises réglables de manière à s'ajuster à la main de l'utilisateur, quatre contacteurs 25.

Les contacteurs sont commandés par des leviers 26, sur lesquels sont fixées des bagues 27. On dispose d'un choix de bagues pour adaptation aux différentes conformations des doigts.

Un capotage de protection 28, solidaire du chassis général, est prévu devant les doigts, de manière à protéger les contacteurs contre toute action intempestive.

On remarque sur le dessus 23 les touches du pouce 29, ainsi qu'une touche 30 pour mise en marche et arrêt du système.

Les voyants 31 assurent la signalisation du mode de fonctionnement du clavier. En effet, lors de la saisie vocale, un mot comme cinq peut être interprété de plusieurs façons. Il importe de fixer à la machine à l'aide du clavier s'il s'agit de cinq en lettres ou en chiffres, si l'on veut marger à cinq, si l'on utilise le code mémoire 5, etc. . . .

Un clavier d'une main possède 4 à 5 touches pour le pouce, et quatre touches par doigt, ce qui peut être insuffisant pour un usage en dactylographie ou d'autres usages de saisie. Dans ce cas, il est possible, dans la présente invention, d'inclure des inclinomètres réalisés par ampoules au mercure ou autre système comme aimant et relais reed, etc. . . .

Grâce à cet artifice, l'inclinaison avant, arrière, droite et gauche du clavier fournissent des signaux électriques qui, en combinaison avec les autres touches, portent le nombre de signaux touches plus un sens inclinomètre à quatre vingt environ, ce qui est plus que suffisant pour les applications envisagées.

Une autre variante de l'appareil consiste à connecter un registreur pour utilisation, en temps différé. Une piste ou une partie de l'enregistreur captera le son, l'autre captera les codes claviers.

Une autre variante qui est illustrée par la figure 3 consiste à relier le clavier par une connexion 32 à un émetteur haute fréquence 33, alimenté en énergie par un pack batterie 34. Cet émetteur sert de support au clavier lorsqu'il n'est pas utilisé.

L'ensemble est fixé sur un support en cuir ou en plastique 35 pour fixation sur les vêtements.

Les informations ainsi transmises sont recueillies par un système informatique pour le traitement. Dans ce cas, il est particulièrement intéressant de communiquer avec le système en mode duplex, les commandes 36 permettent de sélectionner le mode de transmission.

Un autre mode intéressant est la double transmission dont le retour s'effectue par l'intermédiaire d'un synthétiseur de paroles. La sortie du haut parleur 37 renseigne l'utilisateur sur la bonne saisie des informations.

Il est à noter que lorsqu'une erreur de saisie vocale s'est produite, il est inutile de se servir du clavier en mode dactylographique, il suffit de l'utiliser en mode épeler.

Les ensembles de commande du clavier comportent une bague 27 qui est légèrement incurvée de manière à s'adapter à la forme des secondes articulations interphalangiennes. Cette forme fonctionnelle permet de tirer suivant le sens A de la figure 14, c'est-à-dire selon l'axe de la bague 27.

Il faut remarquer sur la figure 11 la position de la main de l'utilisateur: c'est une position de relaxation pour les muscles de l'aponévrose palmaire et les muscles lombricaux, ce qui permet d'obtenir, sans effort, une position stable de référence sur le contacteur.

Il a été observé que les mouvements les plus faciles à obtenir séparément par chaque doigt, et en même temps susceptibles d'action reflexe, sont ceux qui sont repérés sur la figure 14 par les directions A.B.C.D. et qui correspondent respectivement à des pivotements du doigt autour du centre de la main et à l'ouverture ou la fermeture du doigt. Sur cette figure, la tige 26 du contacteur est protégée, à sa pénétration dans le contacteur, par un petit soufflet 38.

Cette tige est percée d'une lumière 39 qui doit tourner ou se translater autour de l'axe 40.

Dans le cas d'un déplacement suivant l'axe AB de la bague, ce sont les touches A ou B qui seront activées. Si, au contraire, il s'agit d'un déplacement suivant l'axe CD, ce sont les touches C ou D qui seront activées. Les contacteurs 25 peuvent s'assembler mécaniquement entre eux suivant différents procédés, tout en permettant un réglage au moment de l'assemblage.

Ces techniques, comme les pions crantés, les queues d'aronde, les adhésifs sont connus; nous ne les décrirons pas plus avant.

De même, il a été représenté figure 15 un détail d'un contact 41, mais d'autres variantes existent, font partie de l'état de la technique et peuvent convenir pour la présente invention.

On remarque le poussoir 42, la capsule 43 qui fait le déclic et le contact 44 sur les fils 45. Ce type de poussoir convient bien à cette application, en raison du déclic qui rend l'usage du clavier plus aisé. Cependant, avec des touches intégrées au contacteur comme sur la figure 6, et ne possédant pas de déclic, il est possible d'obtenir un fonctionnement satisfaisant. Pour cela, le déplacement du levier 26 doit être suffisamment dur et le contact doit, en même temps, déclencher un bip sonore.

Sur la figure 16, la position centrale est obtenue grâce à des plots en néoprène® 46. Des limiteurs de course 47 permettent, en outre, d'établir les contacts sur les fils. Un boîtier de connexions 48 est prévu à l'arrière de l'appareil.

Sur la figure 17 un effet sensitif est obtenu lorsque le ressort 49 ploie au moment du contact. Pour la réalisation des contacteurs, on peut employer des touches à relais "REED", des touches à effet HALL, des touches à effet capacitif, des touches à membrane.

Il est recommandé d'utiliser des circuits anti-rebond sur les touches.

Le clavier selon l'invention présentement décrite peut être réalisé en plastique ou en métal, avec certaines parties démontables, avec des décorations et, en conjonction, avec d'autres systèmes de saisie — (vocale, lecteur optique, etc. . . .).

L'invention est particulièrement indiquée pour la saisie d'information.

Il est possible, par reflexes, d'actionner les différentes touches ce qui, combiné avec un appareil de saisie vocale par laryngophe ou autre, autorise une saisie plus efficace en temps réel.

Pour l'utilisation d'un tel clavier, l'apprentissage, très rapide, s'opère par exercices programmés et s'apparente à l'apprentissage du code MORSE par actions reflexes.

**Revendications**

1. Clavier de commande comportant un corps (1) qui peut être maintenu dans une position fixe par rapport à la paume et au dos de la main d'un opérateur sans immobiliser les doigts, et des touches (2, 6, 78, 41) portées par ledit corps et susceptibles d'être actionnées par lesdits doigts, chaque touche étant disposée pour être toujours actionnée par le même doigt, des touches étant susceptibles d'être actionnées par un doigt lorsque, à partir de la position de repos où le doigt est demi-fléchi, le doigt se déplace dans un premier mouvement qui est celui qu'il opère lors de la fermeture de l'ensemble de la main, et d'autres touches étant susceptibles d'être actionnées par un doigt lorsque, à partir de la même position de repos, le doigt se déplace dans un second mouvement qui est dans le sens opposé audit premier mouvement, caractérisé en ce qu'il comporte encore des touches susceptibles d'être actionnées par un doigt lorsqu'il opère un troisième mouvement perpendiculaire aux précédents et correspondant à une ouverture du doigt, et des touches susceptibles d'être actionnées par un doigt lorsqu'il opère un quatrième mouvement de sens opposé audit troisième mouvement et qui correspond à une fermeture du doigt sur lui-même.

2. Clavier selon la revendication 1, caractérisé en ce qu'il est prévu des touches (6, 7) actionnables par la face extérieure de la phalange ou la phalangine du doigt.

3. Clavier selon la revendication 2, caractérisé en ce que 4 touches actionnables par 4 doigts et placées à près en ligne sont groupées en une barrette démontable.

4. Clavier selon la revendication 1, caractérisé en ce qu'il comporte au moins une bague (27) portée par un doigt, de forme adaptée pour transmettre une traction lors d'un mouvement de fermeture du doigt, et munie de connexions mécaniques (26) qui actionnent un contacteur (25) à plusieurs positions pourvu de touches qui sont actionnées de façon différente par les quatre mouvements précités du doigt.

5. Clavier selon la revendication 4, caractérisé en ce que la bague (27) est incurvée pour s'adapter à la forme de la seconde articulation inter-phalangienne.

6. Clavier selon l'une des revendications 1 à 5, caractérisé en ce que le corps du clavier est équipé d'un micro unidirectionnel.

7. Clavier selon la revendication 6, caractérisé en ce qu'il est couplé avec enregistreur qui enregistre simultanément le son et les signaux émis par les touches et contacts du clavier.

8. Clavier selon l'une des revendications 1 à 7, caractérisé en ce que le corps du clavier est équipé tête de lecture de codes batonnets.

9. Clavier selon l'une des revendications 1 à 8, caractérisé en ce que le corps du clavier est solidaire d'un stick monté sur un support fixe et équipé de potentiomètres qui émettent des signaux proportionnels à l'amplitude de ses déplacements.

**Patentansprüche**

1. Tastatur mit einem Körper (1), der in einer festen Lage zu der Handfläche und dem Handrücken einer Bedienungsperson gehalten werden kann, ohne die Finger unbeweglich zu machen, mit Tasten (2, 6, 78, 41), die von dem Körper getragen werden und durch die Finger betätigbar sind, wobei jede Taste zur Betätigung stets durch denselben Finger angeordnet ist, mit Tasten, die durch einen Finger betätigbar sind, wenn ausgehend von einer Ruhestellung, in der der Finger halb gekrümmt ist, sich der Finger in einer ersten Bewegung verlagert, die diejenige ist, die er während des Schließens der gesamten Hand ausübt, und mit anderen Tasten, die durch einen Finger betätigbar sind, wenn sich der Finger, ausgehend von derselben Ruhestellung, mit einer zweiten Bewegung in einem zu der obengenannten ersten Bewegung entgegengesetzten Sinn verlagert, dadurch gekennzeichnet, daß sie außerdem Tasten trägt, die zur Betätigung durch einen Finger geeignet sind, wenn dieser eine dritte Bewegung senkrecht zu den voranstehend genannten Bewegungen und einem Öffnen des Fingers entsprechend ausübt, und mit Tasten, die zur Betätigung durch einen Finger eingerichtet sind, wenn dieser eine vierte Bewegung ausübt, die entgegengesetzt zu der dritten Bewegung verläuft und einem Schließen des Fingers auf sich selbst entspricht.

2. Tastatur nach Anspruch 1, dadurch gekennzeichnet, daß sie mit Tasten (6, 7) versehen ist, die durch die Außenseite des Fingerglieds oder des Mittelglieds des Fingers betätigbar ist.

3. Tastatur nach Anspruch 2, dadurch gekennzeichnet, daß 4 Tasten durch 4 Finger betätigbar und annähernd in einer Reihe angeordnet sind und in einer demontierbaren Leiste gruppiert sind.

4. Tastatur nach Anspruch 1, dadurch gekennzeichnet, daß sie wenigstens einen von einem Finger tragbaren Ring (27) dergestalt aufweist, daß eine bei einer Schließbewegung des Fingers auftretende Betätigungskraft übertragen werden kann, und der mit mechanischen Verbindungen (26) versehen ist, die einen Kontaktgeber (25) für mehrere Stellungen und mit Tasten versehen betätigen, die in der voranstehend genannten Weise unterschiedlich betätigt werden.

5. Tastatur nach Anspruch 4, dadurch gekennzeichnet, daß der Ring krumm ist, um an die Form des zweiten Gelenks zwischen den Fingergliedern angepaßt zu sein.

6. Tastatur nach einem der Ansprüche 1—5, dadurch gekennzeichnet, daß der Körper der Tastatur mit einem Richtmikrofon versehen ist.

7. Tastatur nach Anspruch 6, dadurch gekennzeichnet, daß sie mit einer Speichereinrichtung verbunden ist, die gleichzeitig den Ton und von den Tasten und Kontakten der Tastatur ausgesandte Signale speichert.

8. Tastatur nach einem der Ansprüche 1—7, dadurch gekennzeichnet, daß die Tastatur mit einem Strichcode-Lesekopf ausgerüstet ist.

9. Tastatur nach einem der Ansprüche 1—8, dadurch gekennzeichnet, daß der Körper der Tastatur mit einem Steuerstab (Stick) eine Einheit bildet, der an einem festen Träger angebracht ist und mit Potentiometern ausgestattet ist, die Signale proportional der Größe ihrer Auslenkungen abgeben.

**Claims**

1. Control keyboard comprising a body (1) which can be kept in a fixed position in relation to the palm and the back of the operator's hand without immobilising the fingers, and keys (2, 6, 78, 41) mounted on the said body and capable of being operated by the said fingers, each key being arranged so as to be always operated by the same finger, keys being capable of being operated by a finger when, from the rest position where the finger is half-inflected, the finger performs a first movement which is that which it performs when the whole of the hand is closed, and other keys being capable of being operated by a finger when, from the same rest position, the finger performs a second movement which is in the opposite direction to the said first movement, characterised in that it also comprises keys capable of being operated by a finger when it performs a third movement which is perpendicular to the previous movements and which correspond to an opening action of the finger, and keys capable of being operated by a finger when it performs a fourth movement which is in the opposite direction to the said third movement and which corresponds to a closing action of the finger onto itself.

2. Keyboard according to Claim 1, characterised in that keys (6, 7) are provided which can be operated by the external side of the phalanx or the second phalanx of the finger.

3. Keyboard according to Claim 2, characterised in that 4 keys which can be operated by 4 fingers and which are located more or less in a line are grouped on a small removable bar.

4. Keyboard according to Claim 1, characterised in that it comprises at least one ring (27) which is carried by a finger, is of suitable shape for transmitting a pulling force during a closing movement of the finger and is provided with mechanical connections (26) which actuate a multi-position contactor (25) provided with keys which are operated in a different manner by the four above mentioned movements of the finger.

5. Keyboard according to Claim 4, characterised in that the ring (27) is curved so as to match the shape of the second interphalangeal joint.

6. Keyboard according to one of Claims 1 to 5, characterised in that the keyboard body is equipped with a unidirectional microphone.

7. Keyboard according to Claim 6, characterised in that it is coupled with a recorder which simultaneously records the sounds and the signal emitted by the keys and contacts of the keyboard.

8. Keyboard according to one of Claims 1 to 7, characterised in that the keyboard body is equipped with a head for reading bar-codes.

9. Keyboard according to one of Claims 1 to 8, characterised in that the keyboard body is integral with a stick mounted on a fixed support and equipped with potentiometers which emit signals proportional to the amplitude of its movements.

0 050 565

FIG.2

FIG.1

FIG.3

**FIG. 4**

**FIG. 5**

**FIG. 6**

FIG.7

FIG.8

FIG 9

FIG.10

**FIG.11**

26
27
28
25
24
21
22

**FIG.12**

30
23
29
31

**FIG.13**

35
33
36
23
37
21
32
22
34

5

FIG.14

FIG.15

FIG.16

FIG.17